# EUROPEAN PATENT APPLICATION

(11) **EP 3 588 276 A1**
(43) Date of publication of application: **01.01.2020**
(21) Application number: 19183012.4
(22) Date of filing: 27.06.2019
(51) Int. Cl.: G06F 8/65

(54) **SELECTIVE DOWNLOAD OF A PORTION OF A FIRMWARE BUNDLE**

(30) Priority: 27.06.2018 US 201816020614
(71) Applicant: Hewlett Packard Enterprise Development LP, Houston, TX 77070 (US)
(72) Inventor: CHINTAGUNTA, Murali Mohan Chakravarthy, 560048 Mahadevapura, Banglaore (IN); MANI, Krishna Kumar, 560048 Mahadevapura, Banglaore (IN)
(74) Representative: Haseltine Lake Kempner LLP

(57) **Abstract**

In some examples of the present disclosure, a method can include selectively downloading only a metadata portion of a remotely web-hosted distributable firmware bundle, reviewing the downloaded metadata portion to identify files of the distributable firmware bundle for firmware components applicable to a given machine, and selectively downloading only the identified files.

## Description

### BACKGROUND

Firmware can be used to provide low-level hardware control of computing devices. In devices with complex software, firmware can be used to provide a standardized operating environment for interfacing with the hardware. In less complex devices, firmware can be used to serve as the device's operating system, for example, performing control, monitoring, and data manipulation functions. Administrators of such devices may seek to update device firmware for example when new device firmware updates are released or otherwise become available.

### BRIEF DESCRIPTION OF DRAWINGS

FIG. 1 is a flowchart for a method, according to an example.
FIG. 2 is a diagram of a data structure showing a metadata portion of a firmware bundle.
FIG. 3 is a diagram of a data structure showing a metadata portion and identified files of a firmware bundle for firmware components applicable to a given machine.
FIG. 4 is a chart showing an amount of data transferred over a network for one implementation of the present disclosure compared to an existing solution.
FIG. 5 is a diagram of a computing device, according to an example.
FIG. 6 is a diagram of a machine-readable storage medium, according to an example.

### DETAILED DESCRIPTION

The following discussion is directed to various examples of the disclosure. Although one or more of these examples may be preferred, the examples disclosed herein should not be interpreted, or otherwise used, as limiting the scope of the disclosure, including the claims. In addition, the following description has broad application, and the discussion of any example is meant only to be descriptive of that example, and not intended to intimate that the scope of the disclosure, including the claims, is limited to that example. Throughout the present disclosure, the terms "a" and "an" are intended to denote at least one of a particular element. In addition, as used herein, the term "includes" means includes but not limited to, the term "including" means including but not limited to. The term "based on" means based at least in part on.

It is appreciated that managing individual updates across potentially thousands of different hardware components in a data center or other computing center is often administratively challenging and in some situations may be unfeasible. As a result, it is common to bundle firmware files for different hardware into one large distributable firmware bundle. Such a bundled distribution can, in some situations, contain all potential firmware images such as firmware service packs, hot fixes and patches, Open Virtual Appliance (OVA) images etc., in a single file package. Due to the aggregated nature of the distributable firmware bundle and the sheer volume of sub-component firmwares, the bundle file can, in some situations, be very large in size. It is further noted that the large size and single-file nature of such a bundle can, in some situations, complicate the visualization of contents because gigabytes of data are generally needed to be loaded over the network and loaded into memory in order to get salient details of the bundle contents.

Certain implementations of the present disclosure seek to address the above issues. In some implementations, a method can include: (a) selectively downloading only a metadata portion of a remotely web-hosted distributable firmware bundle; (b) reviewing the downloaded metadata portion to identify files of the distributable firmware bundle for firmware components applicable to a given machine; and (c) selectively downloading only the identified files. In some implementations, the metadata portion includes at least boot record volume descriptors, primary volume descriptors, volume descriptors, partition information, information regarding firmware components present in bundle, and applicable hardware platforms and operating systems.

Certain implementations of the present disclosure may provide an efficient way to examine select regions of an entire distributable firmware bundle in order to retrieve only information that is relevant for a given set of hardware. In some implementations, there is no need to transfer gigabytes of data. Instead, a small fraction of the package (e.g., as little as 1%) can be transferred, which can improve efficiency of the overall system, and can further reduce network traffic and high latency disk Input/Output (I/O) operations. Other advantages of implementations presented herein will be apparent upon review of the description and figures.

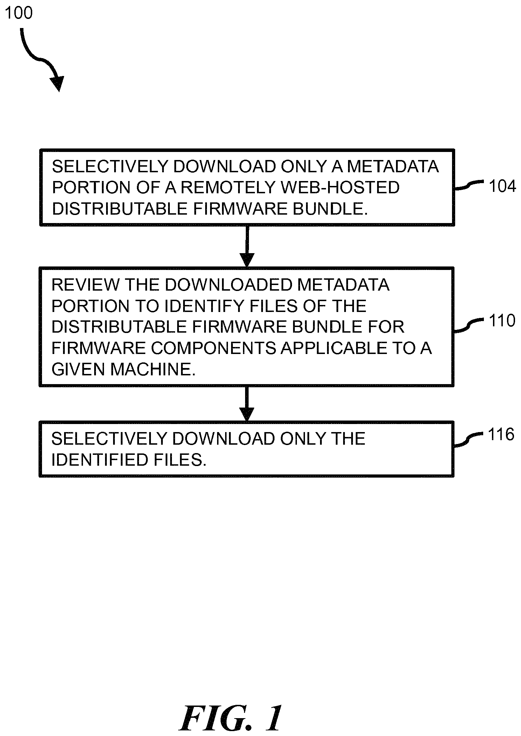

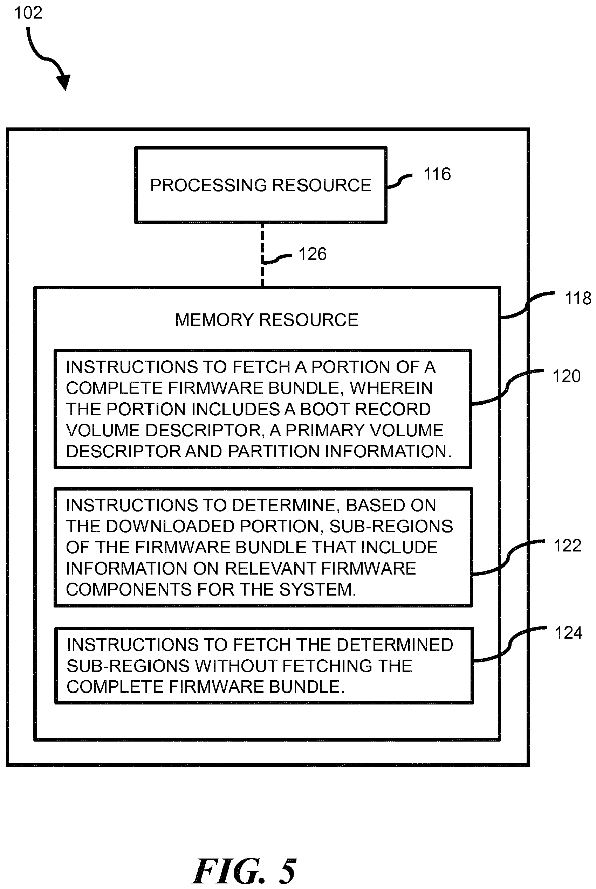

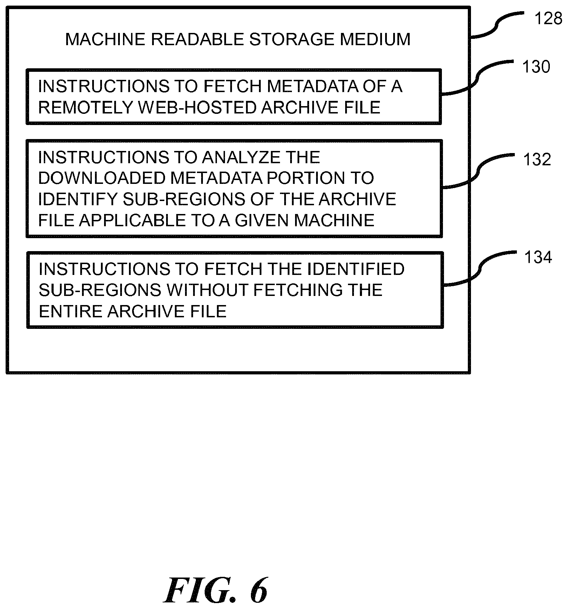

FIG. 1 depicts a flowchart for an example method 100 related to selective download of a portion of a firmware bundle. In some implementations, method 100 can be implemented or otherwise executed through the use of executable instructions stored on a memory resource (e.g., the memory resource of computing device 102 of FIG. 5), executable machine readable instructions stored on a storage medium (e.g., the medium of FIG. 6), in the form of electronic circuitry (e.g., on an Application-Specific Integrated Circuit (ASIC)), and/or another suitable form. Although the description of method 100 herein primarily refers to steps performed on a local computing device 102 for purposes of illustration, it is appreciated that in some implementations, one or more steps of method 100 can be executed on a device remote to computing device 102 or a data center housing computing device 102. In some implementations, one or more steps of method 100 can be executed on a device in data communication with computing device 102. In some implementations, method 100 can be executed on devices in parallel (e.g., in a distributed computing fashion).

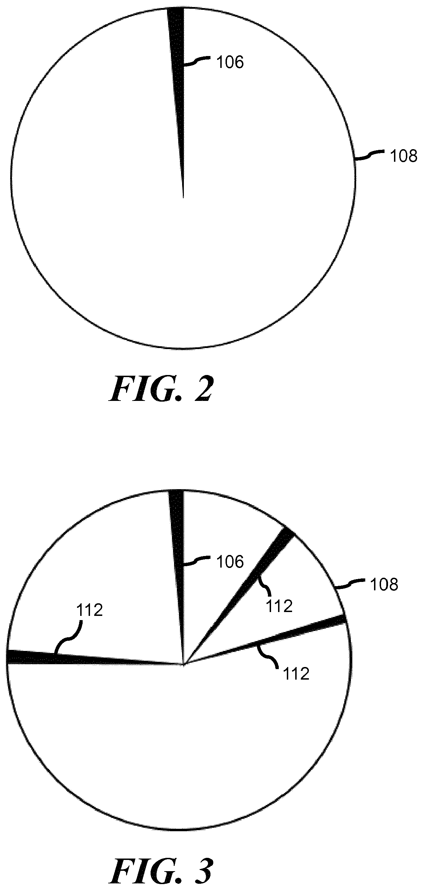

Method 100 includes selectively (at block 104) downloading only a metadata portion of a remotely web-hosted distributable firmware bundle. FIG. 2 is a diagram showing an example metadata portion 106 on an example data structure 108. It is appreciated that metadata portion 106 shown in FIG. 2 is merely representative and can be any suitable shape, size, or location within a firmware bundle stored on data structure 108. Moreover, it is appreciated that metadata portion 106 can, in some implementations, be a continuous section of data structure 108 as depicted for example in FIG. 2, whereas in some implementations, metadata portion 106 can be composed of multiple non-continuous sections of data structure 108 and can be downloaded in serial or in parallel.

In some implementations, data structure 108 can be in the form of an archive file, such as a suitable ISO file. It is appreciated that the term "data structure" is to be construed broadly and can refer to a tangible data structure, such as a CD-ROM, a virtualized structure stored on a suitable computer-readable medium (e.g., a storage drive containing multiple ISO files), or provided in another suitable format that allows selective downloading of data from data structure 108.

Data structure 108 can, contain an entire package including various firmware components for separate devices. For example, in some implementations, data structure 108 can contain firmware components for various models and versions of servers, storage, and networking devices within a data center (or other location). It is appreciated that data structure 108 can further contain firmware components for models and versions of servers, storage, and networking devices that are not present in a given data center and may not need to be downloaded. Likewise, it is appreciated that data structure 108 may contain firmware components that are not to be downloaded because the applicable device is already running the latest firmware (or for another reason).

Metadata portion 106 can, in some implementations, include at least boot record volume descriptors, primary volume descriptors, volume descriptors, partition information, information regarding firmware components present in bundle, and applicable hardware platforms and operating systems. In some implementations, metadata portion 106 can include an inventory of files of the firmware bundle. In some implementations, metadata portion 106 does not include the boot sector for the distributable firmware bundle. In some implementations, metadata portion 106 does not include firmware files for specific machines but may include data about such firmware files.

In some implementations, the size of metadata portion 106 is less than about 60 megabytes. In some implementations, the size of metadata portion 106 is less than about 30 megabytes. In some implementations, a user may configure a maximum (and/or minimum) size for metadata portion 106 to be downloaded. In some implementations, an acceptable size for metadata portion 106 can, for example, be determined based on various factors and can be performed manually or automatically.

One or more operations of method 100 can rely on the use of suitable downloading and filesystem tools. For example, in some implementations, the WebDAV HTTP protocol and the Linux FUSE (Filesystem in User Space) driver may be used. Certain implementations may rely on the Linux FUSE file system, which may allow for the mounting of an HTTP Uniform Resource Identifier (URI) as a file system to access independent files. In some implementations, files can be fetched on demand using HTTP range gets or another suitable fetching mechanism.

In some implementations, the distributable firmware bundle is hosted on a read-only remote filesystem, such as a suitable web server. The web server, can for example, be a HTTP or HTTPS web server. The distributable firmware bundle, can for example, be in the form of an ISO image file or another suitable archive file. As used herein, the term "ISO image file" can, for example, refer to an archive file of an optical disc, a type of disk image composed of the data contents from every written sector on an optical disc, including the optical disc file system. Such an archive file can, in some implementations, be uncompressed with a sector-by-sector copy of data from another disk (e.g., an optical disc) and stored inside a binary file.

Method 100 includes reviewing (at block 110) the downloaded metadata portion 106 to identify files of the distributable firmware bundle for firmware components applicable to a given machine. FIG. 3 is a diagram of data structure 108 showing metadata portion 106 and sections 112 of firmware component files identified as being applicable to a given machine. In some implementations, sections 112 can define a set of small follow-up fetches over a network. As used herein, the term "given machine" can, for example, refer to a machine, device, system, etc., on which firmware is to be installed, flashed, etc. Such a machine can, in some suitable implementations, be in the form of physical equipment, such as a physical computer server. In some implementations, such a machine can be a virtualized machine or some appropriate combination of physical and virtual components.

Method 100 includes selectively downloading (at block 114) only the files identified in block 110. In some implementations, selectively downloading metadata portion 106 and the identified files includes downloading using HyperText Transfer Protocol (HTTP) or HTTP Secure (HTTPS). In some implementations, the downloading of block 114 can include downloading to the given machine of block 110.

In some implementations, one or more steps of method 100 can be performed by the same computing device that is to execute the firmware. In some implementations, one or more steps of method 100 can be performed by a device that is remote from a device on which the firmware is to be executed. For example, block 104 of selectively downloading a metadata portion, block 110 of reviewing the metadata portion, and block 114 of selectively downloading identified files can all be executed by a remote firmware management server. In such an implementation, method 100 can further include later transmitting the files downloaded at block 114 onto a device on which the firmware components are to be executed.

In some implementations, data can be downloaded (e.g., the downloading of blocks 104 and 110) based on user demand. For example, not only the initial metadata of block 104, but one or more data sections of the ISO (e.g., block 113) can be downloaded selectively and at any time period and can also be done in parallel. In some implementations, one or downloading operations can be performed in parallel and also can be done at various points in time. Data, such as a firmware inventory can be fetched in advance and shown to the user. The user can then decide when to flash specific components. It is appreciated that in some implementations, specific components may be fetched and flashed immediately or delayed in response to one or more criteria.

In some implementations, file signatures downloaded in method 100 (e.g., in block 104 or block 114) can be checked for signature validation and/or other criteria. For example, in some implementations, firmware files in a specific firmware bundle may be signed, and signatures may be verified once downloaded from a remote repository or at another suitable time.

In some implementations, one or more operations of method 100 can be performed periodically. For example, in some implementations, one or more of blocks 104, 110, and 114 (or other operations described herein) may be performed periodically. The various period times for blocks 104, 110, and 114 (or other operations described herein) may be the same or different times. In some implementations, one or more of blocks 104, 110, and 114 (or other operations described herein) may be non-periodic and may be triggered by some network or other event.

Although the flowchart of FIG. 1 shows a specific order of performance, it is appreciated that this order may be rearranged into another suitable order, may be executed concurrently or with partial concurrence, or a combination thereof. Likewise, suitable additional and/or comparable steps may be added to method 100 or other methods described herein in order to achieve the same or comparable functionality. In some implementations, one or more steps are omitted. For example, in some implementations, block 114 of selectively downloading identified files can be omitted from method 100 or performed by a different device. It is appreciated that blocks corresponding to additional or alternative functionality of other implementations described herein can be incorporated in method 100. For example, blocks corresponding to the functionality of various aspects of implementations otherwise described herein can be incorporated in method 100 even if such functionality is not explicitly characterized herein as a block in method 100.

Various example implementations for the present disclosure will now be described. It is appreciated that these examples may include or refer to certain aspects of other implementations described herein (and vice-versa), but are not intended to be limiting towards other implementations described herein. Moreover, it is appreciated that certain aspects of these implementations may be applied to other implementations described herein.

Certain cloud storage solutions which are based on WEBDAV (similar to certain implementations of the present disclosure) may give an administrator a way to access files stored on a repository. However, if the administrator is to view the inventory or contents of an image, a local copy will be downloaded, which will then be mounted or unpacked in order to view the contents of it. Such an approach can use significantly more data, resources, etc., compared to certain approaches described herein.

Certain software, such as Davfs2 may also rely on HTTP WEBDAV protocol. Such software may allow access of files on a remote repository as a local drive. It may allow administrators to unpack/mount the images listed on a remote repository. However, such software will automatically cache files that are accessed by an administrator in the local cache and mirrors the whole remote repository locally. As a result, most of the reads are performed on a local disk rather than the remote repository, which can consume a lot of disk space and can unnecessarily add I/O and network traffic. When files are very large in size, such a solution may be unreliable, which may make it unsuitable for usage in systems where disk space is limited.

In some implementations of the present disclosure a device may include a feature to fetch, from a cloud-based repository, inventory and/or firmware applicable to the device. In some implementations, the cloud-based repository is hosted on an external webserver. In some implementations, image discovery and inventory is provided for cloud-based repositories. Certain implementations of the present disclosure allow for discovery and inventory of firmware bundles on remote read-only HTTP/HTTPS webservers without caching the ISO files locally (e.g., without unpacking it in the remote hosted server).

In certain implementations of the present disclosure, a solution is provided that can leverage the fact that the file format of certain firmware bundles include a boot record volume descriptor, a primary volume descriptor and partition information in the first 60MB. Using this data, targeted fetches of sub-regions of the Firmware bundle returns information on relevant firmware components, rather than requiring a full download of the ISO (e.g., when hosted on a read only HTTP/HTTPS web server). In certain implementations, a system may not rely on special headers. Instead, the system may make use of standard headers of a data archive (e.g., an ISO) to find the location of files to be accessed.

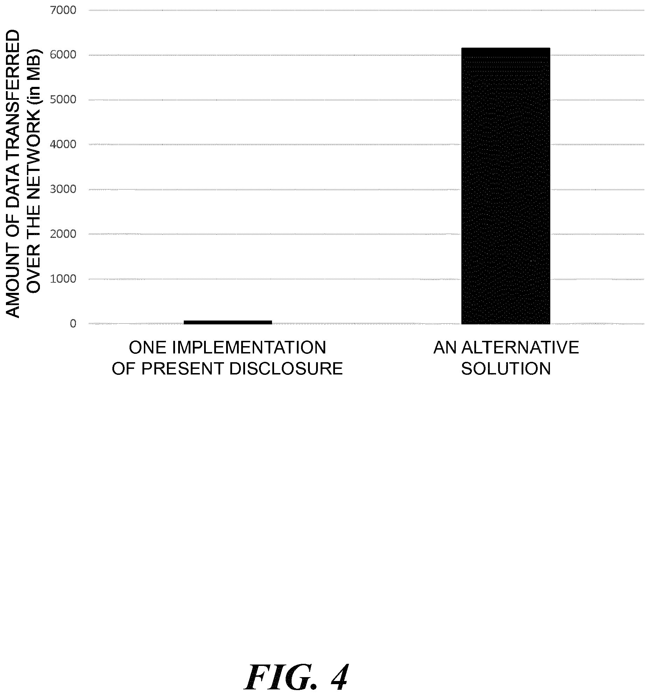

Certain implementations of the present disclosure can help administrators to visualize and walk through the contents of the large distributable firmware bundle file (e.g., an ISO) without copying the bundle locally using HTTP WEBDAV protocol. In certain situations, network I/O may be reduced by nearly 99% compared to conventional approaches. In certain implementations of the present disclosure, strain on customer data-center networks can be reduced. For example, FIG. 4 is a chart showing an amount of data transferred over a network for one implementation of the present disclosure compared to an alternative solution.

Certain implementations of the present disclosure can, for example, reduce requirements on embedded appliance devices that are to look at the inventory of a firmware package but may not have memory or storage resources to handle a multi-gigabyte file (common file sizes for firmware can be 6-7 gigabytes or more). As a result, certain implementations of the present disclosure may allow for the reduction of disk and memory requirements of any receiving appliance that is fetching the desired information. This can allow for significant cost savings when designing such appliances because they can use less memory and local storage. Such cost savings can, in some situations, translate directly to either lower purchase price (competitive advantage) or higher margins versus competitors. By reducing network traffic by up to 99% (or more in certain implementations), certain implementations of the present disclosure can drastically reduce an amount of time to download and/or update firmware. For example, an operation that might conventionally take minutes to complete may be completed in seconds. Such a feature can save time for the datacenter operator, which can translate directly into lower operational costs.

Certain implementations of the present disclosure rely on clever use of the fact that the file format of the distributable firmware bundle includes the Boot Record Volume Descriptors, Primary Volume Descriptor, Volume descriptors and partition information in the first 60MB (or another suitable portion of the firmware bundle). Fetching this 60MB of data may provide all the information needed to make a number of subsequent, extremely targeted, fetches of sub-regions of the distributable firmware bundle to return information about the firmware components that are applicable to a given machine.

FIG. 5 is a diagram of a computing device 102 in accordance with the present disclosure. Computing device 102 can, for example, be in the form of a computing system, e.g., a server, controller, or other suitable computing system. As described in further detail below, computing device 102 includes a processing resource 116 and a memory resource 118 that stores machine-readable instructions 120, 122, and 124. For illustration, the description of computing device 102 makes reference to various other implementations described herein. However it is appreciated that computing device 102 can include additional, alternative, or fewer aspects, functionality, etc., than the implementations described elsewhere herein and is not intended to be limited by the related disclosure thereof.

Instructions 120 stored on memory resource 118 are, when executed by processing resource 116, to cause processing resource 116 to fetch a portion of a complete firmware bundle, wherein the portion includes a boot record volume descriptor, a primary volume descriptor and partition information. In some implementations, the complete firmware bundle is hosted on a read-only web server. In some implementations, the complete firmware bundle is larger than about 5 gigabytes. In some implementations, the portion of the complete firmware bundle includes an inventory of firmware components. Instructions 120 can incorporate one or more aspects of blocks of method 100 or another suitable aspect of other implementations described herein (and vice versa). For example, in some implementations, the portion referenced in instructions 120 can be a metadata portion, such as portion 106 described above with respect to method 100 and FIGs. 2-3.

Instructions 122 stored on memory resource 118 are, when executed by processing resource 116, to cause processing resource 116 to determine, based on the downloaded portion, sub-regions of the firmware bundle that include information on relevant firmware components for the system. Instructions 122 can incorporate one or more aspects of blocks of method 100 or another suitable aspect of other implementations described herein (and vice versa). For example, in some implementations, instructions 122 can analyze a firmware inventory to determine sub-regions of the firmware bundle that include information on relevant firmware components for the system.

Instructions 124 stored on memory resource 118 are, when executed by processing resource 116, to cause processing resource 116 to fetch the determined sub-regions without fetching the complete firmware bundle. In some implementations, processing resource 116 is to both fetch a portion of a complete firmware bundle and fetch the determined sub-regions without unpacking or caching the firmware bundle locally on the system. Instructions 124 can incorporate one or more aspects of blocks of method 100 or another suitable aspect of other implementations described herein (and vice versa).

Processing resource 116 of computing device 102 can, for example, be in the form of a central processing unit (CPU), a semiconductor-based microprocessor, a digital signal processor (DSP) such as a digital image processing unit, other hardware devices or processing elements suitable to retrieve and execute instructions stored in memory resource 118, or suitable combinations thereof. Processing resource 116 can, for example, include single or multiple cores on a chip, multiple cores across multiple chips, multiple cores across multiple devices, or suitable combinations thereof. Processing resource 116 can be functional to fetch, decode, and execute instructions as described herein. As an alternative or in addition to retrieving and executing instructions, processing resource 116 can, for example, include at least one integrated circuit (IC), other control logic, other electronic circuits, or suitable combination thereof that include a number of electronic components for performing the functionality of instructions stored on memory resource 118. The term "logic" can, in some implementations, be an alternative or additional processing resource to perform a particular action and/or function, etc., described herein, which includes hardware, e.g., various forms of transistor logic, application specific integrated circuits (ASICs), etc., as opposed to machine executable instructions, e.g., software firmware, etc., stored in memory and executable by a processor. Processing resource 116 can, for example, be implemented across multiple processing units and instructions may be implemented by different processing units in different areas of computing device 102.

Memory resource 118 of computing device 102 can, for example, be in the form of a non-transitory machine-readable storage medium, such as a suitable electronic, magnetic, optical, or other physical storage apparatus to contain or store information such as machine-readable instructions 120, 122, and 124. Such instructions can be operative to perform one or more functions described herein, such as those described herein with respect to method 100 or other methods described herein. Memory resource 118 can, for example, be housed within the same housing as processing resource 116 for computing device 102, such as within a computing tower case for computing device 102 (in implementations where computing device 102 is housed within a computing tower case). In some implementations, memory resource 118 and processing resource 116 are housed in different housings. As used herein, the term "machine-readable storage medium" can, for example, include Random Access Memory (RAM), flash memory, a storage drive (e.g., a hard disk), any type of storage disc (e.g., a Compact Disc Read Only Memory (CD-ROM), any other type of compact disc, a DVD, etc.), and the like, or a combination thereof. In some implementations, memory resource 118 can correspond to a memory including a main memory, such as a Random Access Memory (RAM), where software may reside during runtime, and a secondary memory. The secondary memory can, for example, include a nonvolatile memory where a copy of machine-readable instructions are stored. It is appreciated that both machine-readable instructions as well as related data can be stored on memory mediums and that multiple mediums can be treated as a single medium for purposes of description.

Memory resource 118 can be in communication with processing resource 116 via a communication link 121. Each communication link 121 can be local or remote to a machine (e.g., a computing device) associated with processing resource 116. Examples of a local communication link 121 can include an electronic bus internal to a machine (e.g., a computing device) where memory resource 118 is one of volatile, non-volatile, fixed, and/or removable storage medium in communication with processing resource 116 via the electronic bus.

In some implementations, one or more aspects of computing device 102 can be in the form of functional modules that can, for example, be operative to execute one or more processes of instructions 120, 122, and 124 or other functions described herein relating to other implementations of the disclosure. As used herein, the term "module" refers to a combination of hardware (e.g., a processor such as an integrated circuit or other circuitry) and software (e.g., machine- or processor-executable instructions, commands, or code such as firmware, programming, or object code). A combination of hardware and software can include hardware only (i.e., a hardware element with no software elements), software hosted at hardware (e.g., software that is stored at a memory and executed or interpreted at a processor), or hardware and software hosted at hardware. It is further appreciated that the term "module" is additionally intended to refer to one or more modules or a combination of modules. Each module of computing device 102 can, for example, include one or more machine-readable storage mediums and one or more computer processors.

In view of the above, it is appreciated that the various instructions of computing device 102 described above can correspond to separate and/or combined functional modules. For example, instructions 120 can, for example, correspond to a "metadata fetching module" to fetch metadata of a remotely web-hosted archive file. Likewise, instructions 122 can, for example, correspond to a "metadata analyzing module" to analyze the downloaded metadata portion to identify sub-regions of the archive file applicable to a given machine. It is further appreciated that a given module can be used for multiple functions. As but one example, in some implementations, a single module can be used to both fetch metadata (e.g., corresponding to the functionality of instructions 120) as well as to fetch identified sub-regions (e.g., corresponding to the functionality of instructions 124).

In some implementations, computing device 102 can further include a suitable communication module to allow networked communication. Such a communication module can, for example, include a network interface controller having an Ethernet port and/or a Fibre Channel port. In some implementations, such a communication module can include wired or wireless communication interface, and can, in some implementations, provide for virtual network ports. In some implementations, such a communication module includes hardware in the form of a hard drive, related firmware, and other software for allowing the hard drive to operatively communicate with other hardware of computing device 102 or other networked equipment. The communication module can, for example, include machine-readable instructions for use with communication the communication module, such as firmware for implementing physical or virtual network ports.

FIG. 6 illustrates a machine-readable storage medium 128 including various instructions that can be executed by a computer processor or other processing resource. In some implementations, medium 128 can be housed within computing device 102 or in local or remote wired or wireless data communication with computing device 102. For illustration, the description of machine-readable storage medium 128 provided herein makes reference to various aspects of computing device 102 (e.g., processing resource 116) and other implementations of the disclosure (e.g., method 100). Although one or more aspects of computing device 102 (as well as instructions such as instructions 120, 122, and 124) can be applied to or otherwise incorporated with medium 128, it is appreciated that in some implementations, medium 128 may be stored or housed separately from such a system. For example, in some implementations, medium 128 can be in the form of Random Access Memory (RAM), flash memory, a storage drive (e.g., a hard disk), any type of storage disc (e.g., a Compact Disc Read Only Memory (CD-ROM), any other type of compact disc, a DVD, etc.), and the like, or a combination thereof.

Medium 128 includes machine-readable instructions 130 stored thereon to cause processing resource 116 to fetch metadata of a remotely web-hosted archive file. In some implementations, instructions 130 fetch metadata of a remotely web-hosted archive file based on standard headers for the archive file. In some implementations, the archive file includes sub-regions that are relevant to machines having different firmware components than the given machine. Instructions 130 can, for example, incorporate one or more aspects of block 104 of method 100 or another suitable aspect of other implementations described herein (and vice versa).

Medium 128 includes machine-readable instructions 132 stored thereon to cause processing resource 116 to analyze the downloaded metadata portion to identify sub-regions of the archive file applicable to a given machine. Instructions 132 can, for example, incorporate one or more aspects of block 110 of method 100 or another suitable aspect of other implementations described herein (and vice versa).

Medium 128 includes machine-readable instructions 134 stored thereon to cause processing resource 116 to fetch the identified sub-regions without fetching the entire archive file. In some implementations, fetching the identified sub-regions includes fetching the identified sub-regions in parallel. Instructions 134 can, for example, incorporate one or more aspects of block 114 of method 100 or another suitable aspect of other implementations described herein (and vice versa).

While certain implementations have been shown and described above, various changes in form and details may be made. For example, some features that have been described in relation to one implementation and/or process can be related to other implementations. In other words, processes, features, components, and/or properties described in relation to one implementation can be useful in other implementations. Furthermore, it should be appreciated that the systems and methods described herein can include various combinations and/or sub-combinations of the components and/or features of the different implementations described. Thus, features described with reference to one or more implementations can be combined with other implementations described herein.

As used herein, "logic" is an alternative or additional processing resource to perform a particular action and/or function, etc., described herein, which includes hardware, e.g., various forms of transistor logic, application specific integrated circuits (ASICs), etc., as opposed to machine executable instructions, e.g., software firmware, etc., stored in memory and executable by a processor. Further, as used herein, "a" or "a number of" something can refer to one or more such things. For example, "a number of widgets" can refer to one or more widgets. Also, as used herein, "a plurality of" something can refer to more than one of such things.

## Claims

1. A method comprising:
selectively downloading only a metadata portion of a remotely web-hosted distributable firmware bundle;
reviewing the downloaded metadata portion to identify files of the distributable firmware bundle for firmware components applicable to a given machine; and
selectively downloading only the identified files.

2. The method of claim 1, wherein downloading the metadata portion includes downloading the metadata portion to a drive local to the given machine.

3. The method of claim 1, wherein the metadata portion includes at least boot record volume descriptors, primary volume descriptors, volume descriptors, partition information, information regarding firmware components present in bundle, and applicable hardware platforms and operating systems.

4. The method of claim 1, wherein the metadata portion does not include the boot sector for the distributable firmware bundle.

5. The method of claim 1, wherein selectively downloading the metadata portion and the identified files includes downloading using HyperText Transfer Protocol (HTTP) or HTTP Secure (HTTPS).

6. The method of claim 1, wherein the distributable firmware bundle is in the form of an ISO image file.

7. The method of claim 1, wherein the size of the metadata portion is less than about 60 megabytes and/or wherein the size of the metadata portion is a configurable size set by a user.

8. The method of claim 1, wherein the distributable firmware bundle is hosted on a read-only web server, wherein, optionally, the web server is a HTTP or HTTPS web server.

9. A non-transitory machine readable storage medium having stored thereon machine readable instructions to cause a computer processor to:
fetch metadata of a remotely web-hosted archive file;
analyze the downloaded metadata portion to identify sub-regions of the archive file applicable to a given machine; and
fetch the identified sub-regions without fetching the entire archive file.

10. The medium of claim 9, wherein the medium readable instructions are to cause a computer processor to:
fetch metadata of a remotely web-hosted archive file based on standard headers for the archive file.

11. The medium of claim 9, wherein the archive file includes sub-regions that are relevant to machines having different firmware components than the given machine.

12. The medium of claim 9, wherein fetching the identified sub-regions includes fetching the identified sub-regions in parallel.

13. A system comprising:
a processing resource; and
a memory resource storing machine readable instructions to cause the processing resource to:
fetch a portion of a complete firmware bundle, wherein the portion includes a boot record volume descriptor, a primary volume descriptor and partition information;
determine, based on the downloaded portion, sub-regions of the firmware bundle that include information on relevant firmware components for the system; and
fetch the determined sub-regions without fetching the complete firmware bundle.

14. The system of claim 13, wherein:
(i) the complete firmware bundle is hosted on a read-only web server; and/or
(ii) the complete firmware bundle is larger than about 5 gigabytes, and/or
(iii) the portion of the complete firmware bundle optionally includes an inventory of firmware components.

15. The system of claim 13, wherein the processor is to both fetch a portion of a complete firmware bundle and fetch the determined sub-regions without unpacking or caching the firmware bundle locally on the system.
